# EUROPÄISCHE PATENTSCHRIFT

(11) **EP 0 924 833 B1**
(45) Veröffentlichungstag und Bekanntmachung des Hinweises auf die Patenterteilung: **27.03.2002**
(21) Anmeldenummer: 98123194.7
(22) Anmeldetag: 04.12.1998
(51) Int. Cl.: H02H 3/33

(54) **Differenzstromschutzeinrichtung mit einer Transduktorschaltung**
Differential current protection device with a transducer circuit
Dispositif protecteur par courant differentiel avec un circuit de transducteur

(30) Priorität: 16.12.1997 DE 19755857
(43) Veröffentlichungstag der Anmeldung: 23.06.1999
(73) Patentinhaber: SIEMENS AKTIENGESELLSCHAFT, 80333 München (DE)
(72) Erfinder: Harr, Dieter Dipl.-Ing, 93049 Regensburg (DE)

(56) Entgegenhaltungen:
- EP-A- 0 440 835
- EP-A- 0 524 142
- DE-A- 3 429 381

## Beschreibung

Die Erfindung bezieht sich auf eine Differenzstromschutzeinrichtung, nachstehend DI-Einrichtung genannt, mit einer Transduktorschaltung, deren Auswerteschaltung zwischen der Sekundärwicklung und einem komplexen, überwiegend kapazitiven Widerstand, Meßwiderstand genannt, angeordnet ist, im einzelnen nach Gattungsbegriff von Anspruch 1. Der Meßwiderstand bildet mit der Sekundärwicklung einen Schwingkreis. Die Auswerteschaltung wirkt auf eine Auslöseeinrichtung ein, wobei die Auswerteschaltung mit Gleichrichterschaltung, Zeitverzögerungsschaltung und Schwellwertschalter arbeitet. Eine derartige bekannte DI-Einrichtung (DE-C-3 429 381) arbeitet mit Integrierglied und Schwellwertschalter und ggf. einer Zenerdiode zum Begrenzen der Impulshöhe der im Sekundärkreis induzierten Spannungsimpulse. Die DI-Einrichtung dort ist dafür entwickelt, erhöhte Störunempfindlichkeit zu bewirken. Die Grundschaltung einer derartigen DI-Einrichtung ist in EP-B1-0 167 079 beschrieben.

Bei der Elektronik der genannten DI-Einrichtungen war eine Auslösezeitverzögerung nicht für sich beabsichtigt, sondern es wurden Maßnahmen ergriffen, um die DI-Einrichtung störfest zu machen. Der Funktion nach liegt hierbei eine geringfügige Zeitverzögerung vor.

Der Erfindung liegt die Aufgabe zugrunde, eine DI-Einrichtung zu entwickeln, die Zeittore mit Nichtauslösezeiten einhalten kann.

Die Lösung der geschilderten Aufgabe erfolgt durch eine DI-Einrichtung nach Anspruch 1. Zwischen der Gleichrichterschaltung der Auswerteschaltung und einem Schwellwertschalter ist eine erste Zeitverzögerungsschaltung darauf abgestimmt, ein gewünschtes Auslöseverhalten zu erzielen. Die dem Schwellwertschalter nachgeschaltete zweite Verzögerungsschaltung ist darauf abgestimmt, daß die Spannung in ihr langsamer abklingt als in der ersten Zeitverzögerungsschaltung. Hierdurch erzielt man, daß beim Abschalten der Netzspannung oder entsprechend beim Ausbleiben der Netzspannung eine Auslösung unterbleibt, die als Fehlauslösung zu verstehen wäre. Die erste Zeitverzögerungsschaltung erlaubt in Verbindung mit dem Schwellwertschalter von Vorschriften geforderte Zeitfenster, in denen eine Auslösung unterbleiben soll, zu erfüllen. Die zweite Zeitverzögerungsschaltung bewirkt, daß beim Abschalten oder Ausbleiben der Netzspannung eine als Fehlauslösung zu wertende Auslösung unterbleibt. Beim Abschalten der Netzspannung geht die Gleichspannung der Bordnetzversorgung für die Elektronik und damit die Referenzspannung des Schwellwertschalters schneller zurück als die Eingangsspannung des Schwellwertschalters, die wegen eines Energiespeichereffektes der ersten Zeitverzögerungsschaltung eine längere Absenkzeit der Spannung aufweist als die Versorgungsspannung beim Abschalten. Der Schwellwertschalter würde nach Abschalten der Netzspannung deshalb ohne die geschilderte Lösung über seine Schaltbedingung sozusagen hinweglaufen. Durch die zweite Zeitverzögerungsschaltung am Ausgang des Schwellwertschalters werden Fehlauslösungen auch dann vermieden, wenn ein Fehlerstrom auftritt.

Nach einer Weiterbildung wird einer geschilderten DI-Einrichtung eine FI-Einrichtung derart parallel geschaltet, daß nach Anspruch 2 beide Einrichtungen auf eine gemeinsame Auslöseeinrichtung einwirken. Dadurch können FI-Einrichtungen mit Zeittoren für Nichtauslösezeiten unterlegt werden. Die FI-Einrichtung stellt hierbei die Funktion der Gesamteinrichtung unabhängig von der Netzspannung. Die FI-Einrichtung wirkt also zur DI-Einrichtung redundant. Die FI-Einrichtung löst in einer üblichen Grundausführung bei Wechselfehlerströmen und in einer heute in der Regel geforderten Ausführung auch bei pulsierenden Fehlerströmen aus. Die DI-Einrichtung löst in der Ausführung nach dem Transduktorprinzip bei sämtlichen Fehlerstromarten, also auch bei glattem Gleichfehlerstrom, aus.

Die Sekundärwicklung ist vorteilhaft mit einem Rechteckgenerator an der Seite verbunden, an der der Meßwiderstand nicht angeschlossen ist, wobei die Auslöseeinrichtung über ein Schaltschloß auf Schaltkontakte in zu überwachenden Leitungen arbeitet. Hierdurch erzielt man eine in der Praxis günstige Lösung. Dem Rechteckgenerator kann ein Verstärker in an sich bekannter Weise nachgeschaltet sein. Die Auswerteeinrichtung kann in der Praxis vorteilhaft über einen Verstärker mit der Auslöseeinrichtung verbunden sein. Zwischen der Sekundärwicklung und dem Meßwertwiderstand kann in an sich bekannter Weise ein ohmscher Dämpfungswiderstand angeordnet sein.

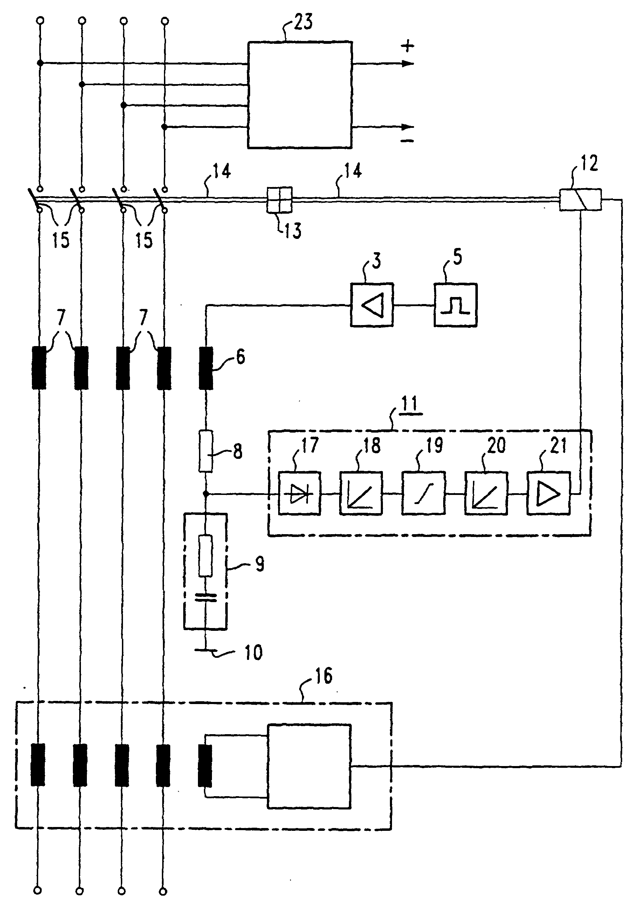

Die Erfindung soll nun anhand eines in der Zeichnung grob schematisch wiedergegebenen Ausführungsbeispiels näher erläutert werden:

Die DI-Einrichtung nach der Zeichnung arbeitet mit einer Transduktorschaltung, deren Auswerteschaltung 11 zwischen der Sekundärwicklung 6 und einem komplexen, überwiegend kapazitiven Widerstand, Meßwiderstand 9 genannt, eingeschaltet ist. Der Meßwiderstand ist bei 10 geerdet bzw. an Bezugsmasse der Schaltung gelegt. Ein Rechteckgenerator 5 steht über einem Verstärker 3 mit einer ersten Anschlußklemme der Sekundärwicklung 6 in Verbindung. Am anderen Anschluß ist der Meßwiderstand 9 angeschlossen. Im Ausführungsbeispiel ist der Meßwiderstand 9 mittelbar angeschlossen, indem ein Dämpfungswiderstand 8 zwischengeschaltet ist. Die Sekundärwicklung 6 mit ihrer Induktivität und der Meßwiderstand 9 mit seiner Kapazität bilden einen Schwingkreis. Er wirkt über die Auswerteschaltung 11 auf eine Auslöseeinrichtung 12 ein. Die Auswerteschaltung 11 arbeitet mit einer Gleichrichterschaltung 17 und einem Schwellwertschalter 19, zwischen denen eine erste Zeitverzögerungsschaltung 18 darauf abgestimmt ist, ein gewünschtes Auslöseverhalten zu erzielen. Dem Schwellwertschalter 19 ist eine zweite Zeitverzögerungsschaltung 20 nachgeschaltet, die darauf abgestimmt ist, daß die Spannung in ihr langsamer abklingt als in der ersten Zeitverzögerungsschaltung 18, derart, daß beim Abschalten der Netzspannung eine Auslösung durch die Auslöseeinrichtung 12 unterbleibt. Es findet daher über die Wirkverbindung 14 von der Auslöseeinrichtung 12 über das Schaltschloß 13 kein Eingriff auf die Schaltkontakte 15 in zu überwachenden Leitungen statt. Primärwicklungen 7 und die Sekundärwicklung 6 sind Teil eines üblichen Summenstromwandlers.

Die Auswerteschaltung 11 weist im Ausführungsbeispiel an ihrem Ausgang einen Verstärker 21 auf, der auf die Auslöseeinrichtung 12 einwirkt. Die Auswerteschaltung 11 ist derart auslöseverzögert, daß glatter Gleichfehlerstrom eine fehlerstromabhängige Spannung erzeugt. Diese Abhängigkeit der Spannung vom Fehlerstrom ist am ausgeprägtesten zwischen dem Gleichrichter 17 und dem Schwellwertschalter 19. Bei kleinem Fehlerstrom wird am Gleichrichter 17 eine relativ kleine Spannung erzeugt, d.h. der Spannung, die ein durchschnittlicher Fehlerstrom erzeugt. Diese wird von der ersten Zeitverzögerungsschaltung 18 verhältnismäßig lang verzögert, bis der Schwellwertschalter 19 beaufschlagt wird. Höherer Fehlerstrom verursacht höhere Spannung und kürzere Auslösezeitverzögerung. Die von den Vorschriften geforderten Auslösezeiten bzw. Zeitfenster für Nichtauslösung können durch geeignete Dimensionierung erzielt werden. Die nachgeschaltete zweite Zeitverzögerungsschaltung 20 verhindert, daß bei Fehlerströmen kleiner als dem Auslösestrom nach Vorschrift sowie bei Fehlerstrom kleiner oder gleich dem 0,5fachen des Nennfehlerstroms die in der ersten Zeitverzögerungsschaltung 18 gespeicherte Energie beim Abschalten der Netzspannung bzw. beim Ausbleiben der Netzspannung, also beim Ausfallen der Bordnetzspannung, die gespeicherte Energie zu einer Fehlauslösung führen kann. Beim Abschalten der Netzspannung geht die Gleichspannung der Bordnetzversorgung und damit die Referenzspannung des Schwellwertschalters 19 nämlich schneller zurück als dessen Eingangsspannung, da diese wegen der Wirkung als Energiespeicher der ersten Zeitverzögerungsschaltung längere Zeit zum Absinken benötigt als die Zeit bis zum Absinken der Referenzspannung. Ohne die erfindungsgemäße Maßnahme würde der Schwellwertschalter 19 sozusagen nach Abschalten der Netzspannung über seine Schaltbedingung hinweglaufen, so daß die DI-Einrichtung unerwünscht auslösen würde. Die zweite Zeitverzögerungsschaltung 20 vor dem Verstärker 21 ist darauf abzustellen, daß die Zeitverzögerung so lange wirkt, bis die in der ersten Zeitverzögerungsstufe 18 gespeicherte Energie abgeklungen ist. Dadurch werden Fehlauslösungen beim Abschalten des Netzes und gleichzeitig fließendem Fehlerstrom bis kleiner oder gleich dem 0,5fachen des Nennfehlerstroms verhindert. Beide Maßnahmen können so aufeinander abgestimmt werden, daß die geforderten Zeittore eingehalten werden und trotzdem eine Fehlauslösung vermieden wird. Die Bordnetzversorgung der elektronischen Schaltungsteile erfolgt durch einen Bordnetzgenerator 23.

Bei der Weiterbildung nach der Zeichnung wirkt auf die Auslöseeinrichtung 12 eine Fehlerstromschutzeinrichtung, nachstehend FI-Einrichtung genannt, 16 parallel ein. Durch eine derartige Anordnung können auch Sondervorschriften erfüllt werden, wonach in Installationen mitunter auslösezeitverzögerte FI-Einrichtungen selektiv sein sollen, kurzzeitverzögert oder auch entsprechend dem "G-Typ" der österreichischen Vorschriften. Weitere Vorschriften sind DIN VDE 0664, IEC 1008, EN 61008. Hierdurch werden mitunter verhältnismäßig lange Zeittore festgelegt, in denen eine Schutzeinrichtung nicht auslösen darf. Zwar sind auslösezeitverzögerte FI-Einrichtungen für Wechsel- und Pulsfehlerströme seit längerem auf dem Markt, für DI-Einrichtungen, die sich als Zusatz für FI-Einrichtungen eignen, sind keine zufriedenstellenden Lösungen bekannt. Die Gesamtschaltung nach der Weiterbildung wirkt bei entsprechender Abstimmung so, daß die DI-Einrichtung für sämtliche Fehlerstromarten die von der jeweiligen Vorschrift geforderten Bedingungen erfüllt und die FI-Einrichtung 16 einen Grundschutz bei Wechselfehlerströmen und in geeigneter Ausführung auch bei pulsierenden Fehlerströmen sicherstellt.

## Patentansprüche

1. Differenzstromschutzeinrichtung, nachstehend DI-Einrichtung genannt, mit einer Transduktorschaltung, deren Auswerteschaltung (11) zwischen der Sekundärwicklung (6) und einem komplexen, überwiegend kapazitiven Widerstand (9), Meßwiderstand genannt, der mit der Sekundwärwicklung (6) einen Schwingkreis bildet, angeordnet ist und auf eine Auslöseeinrichtung (12) einwirkt, wobei die Auswerteschaltung (11) mit Gleichrichterschaltung, Zeitverzögerungsschaltung und Schwellwertschalter arbeitet,
**dadurch gekennzeichnet,**
**daß** zwischen Gleichrichterschalter (17) und Schwellwertschalter (19) eine erste Zeitverzögerungsschaltung (18) darauf abgestimmt ist, ein gewünschtes Auslöseverhalten zu erzielen und daß dem Schwellwertschalter (19) eine zweite Zeitverzögerungsschaltung (20) nachgeschaltet ist, die darauf abgestimmt ist, daß die Spannung in ihr langsamer abklingt als in der ersten Zeitverzögerungsschaltung (18), derart, daß beim Abschalten der Netzspannung eine Auslösung unterbleibt.

2. DI-Einrichtung nach Anspruch 1,
**dadurch gekennzeichnet,**
**daß** auf die Auslöseeinrichtung (12) eine FI-Einrichtung (16) parallel einwirkt.

3. DI-Einrichtung nach Anspruch 1 oder 2,
**dadurch gekennzeichnet,**
**daß** die Sekundärwicklung (6) mit einem Rechteckgenerator (5) an der Seite verbunden ist, an der der Meßwiderstand (9) nicht angeschlossen ist, wobei die Auslöseeinrichtung (12) über ein Schaltschloß (13) auf Schaltkontakte (15) in zu überwachenden Leitungen in einer Wirkverbindung (14) steht.

4. DI-Einrichtung nach Anspruch 1 oder einem der vorhergehenden Ansprüche,
**dadurch gekennzeichnet,**
**daß** dem Rechteckgenerator (5) ein Verstärker (3) nachgeschaltet ist.

5. DI-Einrichtung nach Anspruch 1 oder einem der vorhergehenden Ansprüche,
**dadurch gekennzeichnet,**
**daß** die Auswerteeinrichtung (11) über einen Verstärker (21) mit der Auslöseeinrichtung (12) verbunden ist.

6. DI-Einrichtung nach Anspruch 1 oder einem der vorhergehenden Ansprüche,
**dadurch gekennzeichnet,**
**daß** zwischen Sekundärwicklung (6) und Netzwiderstand (9) ein ohmscher Dämpfungswiderstand (8) angeordnet ist.

## Claims

1. Residual current device, hereinafter referred to as a DI (differential current) device, having a transductor circuit whose evaluation circuit (11) is arranged between the secondary winding (6) and a complex, predominantly capacitive impedance (9), referred to as a precision impedance, which forms a resonant circuit with the secondary winding (6) and acts on a tripping device (12), said evaluation circuit (11) employing a rectifier circuit, time delay circuit and threshold value switch, **characterised in that**, between the rectifier circuit (17) and threshold value switch (19), a first time delay circuit (18) is adjusted to achieve a required tripping behaviour and that the threshold value switch (19) is followed by a second time delay circuit (20) which is adjusted so that the voltage decays more slowly in it than in the first time delay circuit (18) such that no tripping occurs when the mains voltage is switched off.

2. DI device according to Claim 1, **characterised in that** an FI (fault-current) device (16) acts in parallel on the tripping device (12).

3. DI device according to Claim 1 or 2, **characterised in that** the secondary winding (6) is connected to a square wave generator (5) at the side on which the precision impedance (9) is not connected, the tripping device (12) being mechanically linked (14) via a latch (13) to switching contacts (15) in lines to be monitored.

4. DI device according to Claim 1 or one of the preceding claims, **characterised in that** the square wave generator (5) is followed by an amplifier (3).

5. DI device according to Claim 1 or one of the preceding claims, **characterised in that** the evaluation circuit (11) is connected to the triggering device (12) via an amplifier (21).

6. DI device according to Claim 1 or one of the preceding claims, **characterised in that** an ohmic damping resistor (8) is connected between the secondary winding (6) and precision impedance (9).

## Revendications

1. Dispositif protecteur à courant différentiel, appelé ci-dessous dispositif Dl, ayant un circuit de transducteur, dont le circuit d'exploitation (11) est placé entre l'enroulement secondaire (6) et une résistance (9) complexe, principalement capacitive, appelée résistance de mesure et formant avec l'enroulement secondaire (6) un circuit oscillant, et qui agit sur un dispositif de déclenchement (12), le circuit d'exploitation (11) travaillant avec un circuit redresseur, avec un circuit de retardement et avec un interrupteur à valeur de seuil,
**caractérisé par le fait que**, entre le circuit redresseur (17) et l'interrupteur à valeur de seuil (19), un premier circuit de retardement (18) est réglé pour obtenir un comportement de déclenchement souhaité et qu'il est branché du côté aval de l'interrupteur à valeur de seuil (19) un deuxième circuit de retardement (20) qui est réglé pour que la tension dans ce circuit de retardement diminue plus lentement que celle dans le premier circuit de retardement (18) de telle sorte que, lors de la coupure de la tension de réseau, il ne se produise pas de déclenchement.

2. Dispositif DI selon la revendication 1,
**caractérisé par le fait qu'**un dispositif FI (16) agit parallèlement sur le dispositif de déclenchement (12).

3. Dispositif DI selon la revendication 1 ou 2,
**caractérisé par le fait que** l'enroulement secondaire (6) est relié à un générateur rectangle (5) sur le côté auquel la résistance de mesure (9) n'est pas raccordée, le dispositif de déclenchement (12) étant dans une liaison active (14) par l'intermédiaire d'un verrou de maintien (13) sur des contacts de commutation (15) dans des lignes à surveiller.

4. Dispositif DI selon la revendication 1 ou selon l'une des revendications précédentes,
**caractérisé par le fait qu'**un amplificateur (3) est branché du côté aval du générateur rectangle (5).

5. Dispositif DI selon la revendication 1 ou selon l'une des revendications précédentes,
**caractérisé par le fait que** le circuit d'exploitation (11) est relié au dispositif de déclenchement (12) par l'intermédiaire d'un amplificateur (21).

6. Dispositif DI selon la revendication 1 ou selon l'une des revendications précédentes,
**caractérisé par le fait qu'**une résistance ohmique d'amortissement (8) est placée entre l'enroulement secondaire (6) et la résistance de mesure (9).
